(19) Europäisches Patentamt European Patent Office Office européen des brevets

(11) **EP 2 837 125 B1**

(12) **EUROPEAN PATENT SPECIFICATION**

(45) Date of publication and mention
of the grant of the patent:
**08.01.2020 Bulletin 2020/02**

(21) Application number: **13717830.7**

(22) Date of filing: **10.04.2013**

(51) Int Cl.:
*H04L 1/20* $^{(2006.01)}$ *H04L 27/26* $^{(2006.01)}$

(86) International application number:
**PCT/GB2013/050921**

(87) International publication number:
**WO 2013/153382 (17.10.2013 Gazette 2013/42)**

(54) **OFDM SIGNAL TO NOISE RATIO DETECTOR AND METHOD**

DETEKTOR FÜR OFDM-SIGNAL-ZU-RAUSCH-VERHÄLTNIS UND VERFAHREN

DÉTECTEUR DE RAPPORT SIGNAL SUR BRUIT OFDM ET PROCÉDÉ

(84) Designated Contracting States:
**AL AT BE BG CH CY CZ DE DK EE ES FI FR GR
HR HU IE IS IT LI LT LU LV MC MK MT NL NO PL
PT RO RS SE SI SK SM TR**

(30) Priority: **11.04.2012 GB 201206364**

(43) Date of publication of application:
**18.02.2015 Bulletin 2015/08**

(73) Proprietor: **Frontier Silicon Limited
Cambridge
Cambridgeshire CB22 3LJ (GB)**

(72) Inventors:
• **TANG-RICHARDSON, Mel
Cambridge
Cambridgeshire CB22 3LJ (GB)**
• **EMERSON, Christopher Michael
Cambridge
Cambridgeshire CB22 3LJ (GB)**

(74) Representative: **Probert, Rhyan Wyn
Marks & Clerk LLP
62-68 Hills Road
Cambridge CB2 1LA (GB)**

(56) References cited:
**EP-A2- 1 482 699**

• **MILAN ZIVKOVIC ET AL: "An improved
preamble-based SNR estimation algorithm for
OFDM systems", PERSONAL INDOOR AND
MOBILE RADIO COMMUNICATIONS (PIMRC),
2010 IEEE 21ST INTERNATIONAL SYMPOSIUM
ON, IEEE, PISCATAWAY, NJ, USA, 26 September
2010 (2010-09-26), pages 172-176, XP031838179,
ISBN: 978-1-4244-8017-3**

## Description

FIELD OF THE INVENTION

The present invention relates to a method and apparatus for estimating the signal to noise ratio of a broadcast OFDM signal.

BACKGROUND OF THE INVENTION

Measuring the Signal to noise Ratio (SnR) of an ODFM transmission allows the quality of a transmission to be determined. This is useful in situations like service linking and fast scanning where a receiver needs to quickly assess the quality of a signal on another frequency.

Known OFDM detectors work with the paradigm of assuming a signal being received by a receiver is an OFDM signal, and attempt to derive a parameter from it, for example the SnR.

However, this can be a relatively time consuming approach when scanning for OFDM signals, as the receiver has to lock on to what it thinks is an OFDM signal before it can be determined whether or not the signal being received is an OFDM construct. Once it has found a suitable OFDM construct, an estimation of the SnR can then be calculated. Since it can take many symbols, for example up to 300ms for DAB, to lock onto an OFDM signal before a determination of what the signal is can be performed. In OFDM systems such as DAB receiver, such long scan times are not acceptable.

SUMMARY OF THE INVENTION

We have therefore appreciated the need for an improved method of estimating the SnR of a received signal in a relatively short amount of time.

Therefore, the present invention provides, according to claim 1, a method of estimating a signal to noise ratio of a broadcast OFDM signal, the broadcast OFDM signal comprising a plurality of symbols, each symbol comprising a guard frame comprising a cyclic prefix, and a data portion, the method comprising the steps of: receiving a plurality of samples from a broadcast receiver, the number of samples corresponding with the length of at least two OFDM symbols; performing a sliding correlation on the received plurality of samples to identify a peak of correlation between the samples, the sliding correlation occurring a number of samples apart corresponding with a number of samples in the data portion of an OFDM symbol; correcting a phase of the received samples using the identified peak in correlation to generate a phase corrected signal; generating a first signal from first and second samples of the phase corrected signal; generating a second signal from the first and second samples of the phase corrected signal; and calculating an estimation of a signal to noise ratio using the first and second signals.

Advantageously, the method enables a Signal to Noise Ratio of a broadcast OFDM signal to be estimated without having to lock on to the OFDM signal. The method utilises the fact that an OFDM signal comprises portions that are highly correlated (i.e. the guard interval and the corresponding portion at the end of the data portion within the same symbol) since, on transmission, the data in these portions were identical. By comparing these regions and performing sum and difference calculations, a Signal to Noise Ratio can be calculated.

The first samples and second samples are spaced apart by a number of samples corresponding with the number of samples in the data portion of an OFDM symbol. Furthermore, the first samples correspond with the identified peak of correlation in the phase corrected signal.

The first signal comprises a summation of the first and second samples between a start sample and an end sample, wherein the second signal comprises a difference between the first and second samples between the start and end samples, and wherein the start sample corresponds with a sample corresponding with the identified peak in correlation, and the end sample is spaced apart from the start sample by a number of samples corresponding with a number of samples in an OFDM guard frame.

In embodiments, the step of calculating an estimation of a signal to noise ratio comprises calculating a ratio of the first and second signals.

The present invention also provides a receiver, according to claim 6, for estimating a signal to noise ratio of a broadcast OFDM signal, the broadcast OFDM signal comprising a plurality of symbols, each symbol comprising a guard frame comprising a cyclic prefix, and a data portion, the receiver comprising: a tuner coupleable to an antenna for receiving broadcast signals; a demodulator coupled to an output of the tuner for demodulating a received broadcast signal; a sampler for sampling an output of the demodulator; and a processor coupled to an output of the sampler, wherein the processor is configured to process a number of received samples to estimate the Signal to Noise Ratio of a broadcast OFDM signal, the number of samples corresponding with the length of at least two OFDM symbols, and wherein the processor is operable to: perform a sliding correlation on the received plurality of samples to identify a peak of correlation between the samples, the sliding correlation occurring a number of samples apart corresponding with a number of samples in the data portion of an OFDM symbol; correct a phase of the received samples using the identified peak in correlation to generate a phase corrected signal; generate a first signal from first and second samples of the phase corrected signal; generate a second signal from the first and second samples of the phase corrected signal; and calculate an estimation of a signal to noise ratio using the first and second signals.

Advantageously, the receiver enables a Signal to Noise Ratio of a broadcast OFDM signal to be estimated without having to lock on to the OFDM signal. The receiver utilises the fact that an OFDM signal comprises portions that are highly correlated (i.e. the guard interval and the corresponding portion at the end of the data portion within the same symbol) since, on transmission, the data in these portions were identical. By comparing these regions and performing sum and difference calculations, a Signal to Noise Ratio can be calculated.

The first samples and second samples are spaced apart by a number of samples corresponding with the number of samples in the data portion of an OFDM symbol. Furthermore, the first samples correspond with the identified peak of correlation in the phase corrected signal.

The first signal comprises a summation of the first and second samples between a start sample and an end sample, wherein the second signal comprises a difference between the first and second samples between the start and end samples, and wherein the start sample corresponds with a sample corresponding with the identified peak in correlation, and the end sample is spaced apart from the start sample by a number of samples corresponding with a number of samples in an OFDM guard frame.

In further embodiments, the processor is operable to calculate an estimation of a signal to noise ratio by calculating a ratio of the first and second signals.

In all embodiments of the method and receiver, in an OFDM broadcast signal, the first region corresponds with a guard frame of an OFDM symbol, the second region corresponds with a portion of a data portion of an OFDM symbol corresponding with the guard frame. Furthermore, the OFDM symbol may comprise a DAB ensemble.

LIST OF FIGURES

The invention will now be described, by way of example only, and with reference to the drawings, in which:

Figure 1 shows a simplified systems diagram of an OFDM receiver, for example a DAB receiver;

Figure 2 shows an OFDM symbol.

DETAILED DESCRIPTION OF THE PREFERRED EMBODIMENTS

In brief, the present invention can produce an estimate of the signal to noise ratio of an ODFM signal given only two symbols' worth of data without the need for the signal to have tracking and equalisation applied, thus reducing the time taken to perform the estimate and the computational complexity. This method allows the receiver to assess the quality of a signal using very little data (and thus take very little time) and low computational power.

The present invention performs a pre-correction stage on a small part of an OFDM transmission that is insensitive to time and frequency offsets and does not need any pilots. The pre-correction stage is suited to generating signals that estimate the signal to noise ratio. The processing complexity is lower in that it only involved simple time domain processing. No FFT (Fast Fourier Transform) or equalisation or pilot extraction is required in the method of the present invention, which reduces the required computational complexity.

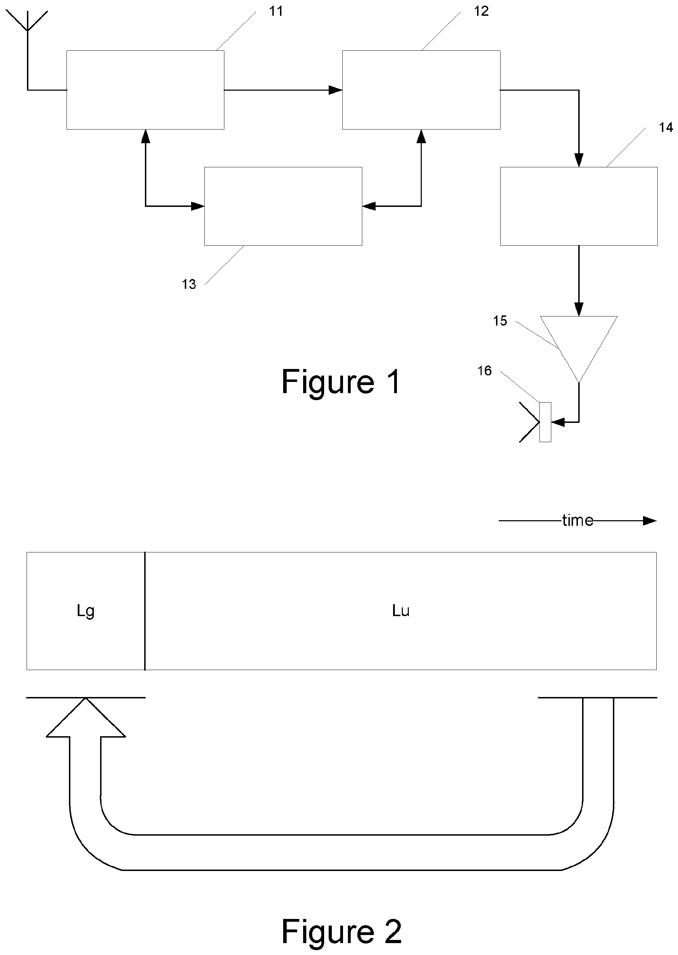

Figure 1 shows a simplified example of an OFDM receiver, for example a DAB radio receiver. A broadcast signal is received by an antenna, which is coupled to a tuner 11. Received signals are passed to a demodulator 12. The tuner 11 and demodulator 12 are controlled by a controller 13. The demodulated signal is then passed to a decoder 14, which decodes data from the OFDM symbol (for example audio), which is then output from the loudspeaker 16 via the power amplifier 15.

Figure 2 shows the basic structure of a broadcast OFDM symbol. The symbol comprises a guard interval or region, which is Lg samples long, and a data region, which is Lu samples long. In OFDM transmission, the guard interval is copy of the latter part of the data region. The guard interval is also known as a cyclic prefix, and advantageously enables receivers to overcome problems associated with received interference.

The invention relies on the fact that, in an OFDM signal, the data in the guard interval is identical with data at the end of the data portion (the so-called cyclic prefix). As such, this data is highly correlated in a true OFDM signal. At the point of receiving the broadcast signal, both guard interval and corresponding data in the data portion will have acquired noise. As such, a sum and difference operation of the signals in the guard interval and the corresponding data in the data portion, enables an SnR to be calculated from a relatively simple (S+N)/N calculation.

In the method according to the present invention, the receiver captures baseband IQ samples. The number of samples must be equivalent to at least two symbol periods including the guards. This signal will be called x(t). This signal can be captured without any time/frequency or equalisation processing.

Firstly a sliding correlation of the input samples is performed to identify the cyclic prefix (i.e. the guard interval or region). The sliding correlation is performed by comparing samples from a first region with other samples taken from the received signal Lu samples away from the first samples. Since the guard interval (when transmitted) is an exact copy of a portion of the data region, as the guard interval is reached, the receiver should see a peak in the correlation. The peak value is found to locate the guard interval at position $n_0$. This stage provides a guard interval correlation.

$$c(n) = \sum_{t=n}^{n+Ls} x(t) \cdot \overline{x(t+Lu)}$$

$$n_0 = \max(c(n))$$

Next, the sampled signal is phase corrected (from now on referred to as z(t)).

The phase corrected signal can now be used to generate sum and difference signals which correspond to (i) signal+noise and (ii) noise. The S+N/N ratio can then be calculated from these sum and difference signals.

$$z(t) = x(t) \cdot \sum_{t=n_0}^{n_0+Lg} x(t) \cdot \overline{x(t+Lu)}$$

$$a(t) = x(t) + z(t+Lu)$$

$$b(t) = x(t) - z(t+Lu)$$

$$snr = \sqrt{\frac{\sum_{t=n_0}^{n_{0+Lg}} a(t)^2}{\sum_{t=n_0}^{n_{0+Lg}} b(t)^2}}$$

In DAB mode 1 a symbol is 1.246ms. Since the detector preferably needs at least 2 symbols, so that's -2.5ms. It is estimated that the controller would take in the order of 0.5ms to perform the above calculations. As such, it is estimated that it may take as little as 3ms to 5ms to determine the SnR of an OFDM signal.

Although the present invention has been described hereinabove with reference to specific embodiments, the present invention is not limited to the specific embodiments and modifications will be apparent to a skilled person in the art which lie within the scope of the claims appended hereto. Any of the embodiments described hereinabove can be used in any combination.

**Claims**

1. A method of estimating a signal to noise ratio of a broadcast OFDM signal, the broadcast OFDM signal comprising a plurality of symbols, each symbol comprising a guard frame comprising a cyclic prefix, and a data portion, the method comprising the steps of:

    receiving a plurality of samples from a broadcast receiver, the number of samples corresponding with the length of at least two OFDM symbols;
    performing a sliding correlation on the received plurality of samples to identify a peak of correlation between the samples, the sliding correlation occurring a number of samples apart corresponding with a number of samples in the data portion of an OFDM symbol;
    correcting a phase of the received samples using the identified peak in correlation to generate a phase corrected signal;
    generating a first signal from first and second samples of the phase corrected signal, the first signal comprises a summation of the first and second samples between a start sample and an end sample;
    generating a second signal from the first and second samples of the phase corrected signal, the second signal comprises a difference between the first and second samples between the start and end samples; and
    calculating an estimation of a signal to noise ratio using the first and second signals,

    wherein the first samples and second samples are spaced apart by a number of samples corresponding with the number of samples in the data portion of an OFDM symbol, and
    wherein the start sample corresponds with a sample corresponding with the identified peak in correlation, and the end sample is spaced apart from the start sample by a number of samples corresponding with a number of samples in an OFDM guard frame.

2. A method according to any preceding claim, wherein calculating an estimation of a signal to noise ratio comprises calculating a ratio of the first and second signals.

3. A method according to any preceding claim, wherein the OFDM symbol comprises a DAB ensemble.

4. A receiver for estimating a signal to noise ratio of a broadcast OFDM signal, the broadcast OFDM signal comprising a plurality of symbols, each symbol comprising a guard frame comprising a cyclic prefix, and a data portion, the receiver comprising:

    a tuner (11) coupleable to an antenna for receiving broadcast signals;
    a demodulator (12) coupled to an output of the tuner (11) for demodulating a received broadcast signal;
    a sampler for sampling an output of the demodulator; and
    a processor coupled to an output of the sampler,

    wherein the processor is configured to process a number of received samples to estimate the Signal to Noise Ratio of a broadcast OFDM signal, the number of samples corresponding with the length of at least two OFDM symbols, and wherein the processor is operable to:

perform a sliding correlation on the received plurality of samples to identify a peak of correlation between the samples, the sliding correlation occurring a number of samples apart corresponding with a number of samples in a data portion of an OFDM symbol;

correct a phase of the received samples using the identified peak in correlation to generate a phase corrected signal;

generate a first signal from first and second samples of the phase corrected signal, the first signal comprises a summation of the first and second samples between a start sample and an end sample;

generate a second signal from the first and second samples of the phase corrected signal, the second signal comprises a difference between the first and second samples between the start and end samples, and wherein the start sample corresponds with a sample corresponding with the identified peak in correlation; and

calculate an estimation of a signal to noise ratio using the first and second signals,

wherein the first samples and second samples are spaced apart by a number of samples corresponding with the number of samples in the data portion of an OFDM symbol, and

wherein the start sample corresponds with a sample corresponding with the identified peak in correlation, and the end sample is spaced apart from the start sample by a number of samples corresponding with a number of samples in an OFDM guard frame.

5. A receiver according to claim 4, wherein the processor is operable to calculate an estimation of a signal to noise ratio by calculating a ratio of the first and second signals.

6. A receiver according to any one of claims 4 or 5, wherein the OFDM symbol comprises a DAB ensemble.

**Patentansprüche**

1. Verfahren zum Schätzen eines Signal-zu-Rausch-Verhältnisses eines Rundfunk-OFDM-Signals, wobei das Rundfunk-OFDM-Signal eine Mehrzahl von Symbolen umfasst, wobei jedes Symbol einen Wachframe, welches einen zyklischen Präfix umfasst, und einen Datenabschnitt umfasst, wobei das Verfahren die folgenden Schritte umfasst:

Empfangen einer Mehrzahl von Proben von einem Rundfunkempfänger, wobei die Anzahl der Proben der Länge von mindestens zwei OFDM-Symbolen entspricht;

Ausführen einer Gleitkorrelation auf der empfangenen Mehrzahl von Proben, um eine Spitze der Korrelation zwischen den Proben zu identifizieren, wobei die Gleitkorrelation bei einer Anzahl von entfernten Proben auftritt, welche einer Anzahl von Proben im Datenabschnitt eines OFDM-Symbols entspricht;

Korrigieren einer Phase der empfangenen Proben unter Verwendung der identifizierten Spitze in der Korrelation, um ein phasenkorrigiertes Signal zu erzeugen;

Erzeugen eines ersten Signals aus den ersten und zweiten Proben des phasenkorrigierten Signals, wobei das erste Signal eine Summierung der ersten und zweiten Proben zwischen einer Startprobe und einer Endprobe umfasst;

Erzeugen eines zweiten Signals aus den ersten und zweiten Proben des phasenkorrigierten Signals, wobei das zweite Signal eine Differenz zwischen den ersten und zweiten Proben zwischen Start- und Endproben umfasst; und

Berechnen einer Schätzung eines Signal-zu-Rausch-Verhältnisses unter Verwendung des ersten und zweiten Signals,

wobei die ersten Proben und die zweiten Proben um eine Anzahl von Proben entfernt sind, welche der Anzahl von Proben in dem Datenabschnitt eines OFDM-Symbols entspricht, und

wobei die Startprobe einer Probe entspricht, welche der identifizierten Spitze in der Korrelation entspricht, und wobei die Endprobe von der Startprobe um eine Anzahl von Proben entfernt ist, welche einer Anzahl von Proben in einem OFDM-Wachframe entspricht.

2. Verfahren nach Anspruch 1, wobei das Berechnen einer Schätzung eines Signal-zu-Rausch-Verhältnisses das Berechnen eines Verhältnisses zwischen dem ersten und zweiten Signal umfasst.

3. Verfahren nach einem der vorhergehenden Ansprüche, wobei das OFDM-Symbol ein DAB-Ensemble umfasst.

4. Empfänger zum Schätzen eines Signal-zu-Rausch-Verhältnisses eines Rundfunk-OFDM-Signals, wobei das Rundfunk-OFDM-Signal eine Mehrzahl von Symbolen umfasst, wobei jedes Symbol einen Wachframe, welches einen zyklischen Präfix umfasst, und einen Datenabschnitt umfasst, wobei der Empfänger umfasst:

einen Tuner (11), welcher mit einer Antenne zum Empfangen von Rundfunksignalen gekoppelt ist;

einen Demodulator (12), welcher mit einem Ausgang des Tuners (11) zum Demodulieren eines empfangenen Rundfunksignals gekoppelt ist;

einen Sampler, zum Abtasten eines Ausgangs des Demodulators; und

einen Prozessor, welcher mit einem Ausgang des Samplers gekoppelt ist,

wobei der Prozessor konfiguriert ist, um eine Anzahl von empfangenen Proben zu verarbeiten, um das Signal-zu-Rausch-Verhältnis eines Rundfunk-OFDM-Signals zu schätzen, wobei die Anzahl von Proben der Länge von mindestens zwei OFDM-Symbolen entspricht, und wobei der Prozessor betreibbar ist, zum:

Ausführen einer Gleitkorrelation auf der empfangenen Mehrzahl von Proben, um eine Spitze der Korrelation zwischen den Proben zu identifizieren, wobei die Gleitkorrelation bei einer Anzahl von entfernten Proben auftritt, welche einer Anzahl von Proben im Datenabschnitt eines OFDM-Symbols entspricht;

Korrigieren einer Phase der empfangenen Proben unter Verwendung der identifizierten Spitze in der Korrelation, um ein phasenkorrigiertes Signal zu erzeugen;

Erzeugen eines ersten Signals aus den ersten und zweiten Proben des phasenkorrigierten Signals, wobei das erste Signal eine Summierung der ersten und zweiten Proben zwischen einer Startprobe und einer Endprobe umfasst;

Erzeugen eines zweiten Signals aus den ersten und zweiten Proben des phasenkorrigierten Signals, wobei das zweite Signal eine Differenz zwischen den ersten und zweiten Proben zwischen Start- und Endproben umfasst, und wobei die Startprobe einer Probe entspricht, die der identifizierten Spitze in der Korrelation entspricht; und

Berechnen einer Schätzung eines Signal-zu-Rausch-Verhältnisses unter Verwendung des ersten und zweiten Signals,

wobei die ersten Proben und die zweiten Proben um eine Anzahl von Proben entfernt sind, welche der Anzahl von Proben in dem Datenabschnitt eines OFDM-Symbols entspricht, und wobei die Startprobe einer Probe entspricht, welche der identifizierten Spitze in der Korrelation entspricht, und wobei die Endprobe von der Startprobe um eine Anzahl von Proben entfernt ist, welche einer Anzahl von Proben in einem OFDM-Wachframe entspricht.

**5.** Empfänger nach Anspruch 4, wobei der Prozessor betreibbar ist, um eine Schätzung eines Signal-zu-Rausch-Verhältnisses durch Berechnen eines Verhältnisses zwischen dem ersten und zweiten Signal zu berechnen.

**6.** Empfänger nach einem der Ansprüche 4 oder 5, wobei das OFDM-Symbol ein DAB-Ensemble umfasst.

**Revendications**

**1.** Procédé d'estimation d'un rapport signal sur bruit d'un signal OFDM de diffusion, le signal OFDM de diffusion comprenant une pluralité de symboles, chaque symbole comprenant une trame de garde qui comprend un préfixe cyclique, et une partie de données, le procédé comprenant les étapes constituées par :

la réception d'une pluralité d'échantillons en provenance d'un récepteur de diffusion, le nombre d'échantillons correspondant à la longueur d'au moins deux symboles OFDM ;

la réalisation d'une corrélation glissante sur la pluralité reçue d'échantillons de manière à identifier une crête de corrélation entre les échantillons, la corrélation glissante apparaissant sur un ensemble d'échantillons espacés dont le nombre correspond à un nombre d'échantillons dans une partie de données d'un symbole OFDM ;

la correction d'une phase des échantillons reçus en utilisant la crête identifiée dans la corrélation de manière à générer un signal à phase corrigée ;

la génération d'un premier signal à partir de premier et second échantillons du signal à phase corrigée, le premier signal comprend une sommation des premier et second échantillons entre un échantillon de début et un échantillon de fin ;

la génération d'un second signal à partir des premier et second échantillons du signal à phase corrigée, le second signal comprend une différence entre les premier et second échantillons entre les échantillons de début et de fin ; et

le calcul d'une estimation d'un rapport signal sur bruit en utilisant les premier et second signaux ;

dans lequel les premiers échantillons et les seconds échantillons sont espacés d'un nombre d'échantillons qui correspond au nombre d'échantillons dans la partie de données d'un symbole OFDM ; et

dans lequel l'échantillon de début correspond à un échantillon qui correspond à la crête identifiée dans la corrélation, et l'échantillon de fin est espacé de l'échantillon de début par un nombre d'échantillons qui correspond à un nombre d'échantillons dans une trame de garde OFDM.

2. Procédé selon la revendication 1, dans lequel le calcul d'une estimation d'un rapport signal sur bruit comprend le calcul d'un rapport des premier et second signaux.

3. Procédé selon l'une quelconque des revendications qui précèdent, dans lequel le symbole OFDM comprend un ensemble DAB.

4. Récepteur pour estimer un rapport signal sur bruit d'un signal OFDM de diffusion, le signal OFDM de diffusion comprenant une pluralité de symboles, chaque symbole comprenant une trame de garde qui comprend un préfixe cyclique, et une partie de données, le récepteur comprenant :

un tuner (11) qui peut être couplé à une antenne pour recevoir des signaux de diffusion ;
un démodulateur (12) qui est couplé à une sortie du tuner (11) pour démoduler un signal de diffusion reçu ;
un échantillonneur pour échantillonner une sortie du démodulateur ; et
un processeur qui est couplé à une sortie de l'échantillonneur ;
dans lequel le processeur est configuré de manière à ce qu'il traite un nombre d'échantillons reçus afin d'estimer le rapport signal sur bruit d'un signal OFDM de diffusion, le nombre d'échantillons correspondant à la longueur d'au moins deux symboles OFDM ; et
dans lequel le processeur peut être rendu opérationnel pour :

la réalisation d'une corrélation glissante sur la pluralité reçue d'échantillons de manière à identifier une crête de corrélation entre les échantillons, la corrélation glissante apparaissant sur un ensemble d'échantillons espacés dont le nombre correspond à un nombre d'échantillons dans une partie de données d'un symbole OFDM ;
la correction d'une phase des échantillons reçus en utilisant la crête identifiée dans la corrélation de manière à générer un signal à phase corrigée ;
la génération d'un premier signal à partir de premier et second échantillons du signal à phase corrigée, le premier signal comprend une sommation des premier et second échantillons entre un échantillon de début et un échantillon de fin ;
la génération d'un second signal à partir des premier et second échantillons du signal à phase corrigée, le second signal comprend une différence entre les premier et second échantillons entre les échantillons de début et de fin, et dans lequel l'échantillon de début correspond à un échantillon qui correspond à la crête identifiée dans la corrélation ; et
le calcul d'une estimation d'un rapport signal sur bruit en utilisant les premier et second signaux ;

dans lequel les premiers échantillons et les seconds échantillons sont espacés d'un nombre d'échantillons qui correspond au nombre d'échantillons dans la partie de données d'un symbole OFDM ; et
dans lequel l'échantillon de début correspond à un échantillon qui correspond à la crête identifiée dans la corrélation, et l'échantillon de fin est espacé de l'échantillon de début par un nombre d'échantillons qui correspond à un nombre d'échantillons dans une trame de garde OFDM.

5. Récepteur selon la revendication 4, dans lequel le processeur peut être rendu opérationnel de manière à ce qu'il calcule une estimation d'un rapport signal sur bruit en calculant un rapport des premier et second signaux.

6. Récepteur selon l'une quelconque des revendications 4 ou 5, dans lequel le symbole OFDM comprend un ensemble DAB.

Figure 1

Figure 2